# EUROPÄISCHE PATENTSCHRIFT

(11) **EP 0 763 461 B1**
(45) Veröffentlichungstag und Bekanntmachung des Hinweises auf die Patenterteilung: **09.09.1998**
(21) Anmeldenummer: 96118842.2
(22) Anmeldetag: 07.04.1995
(51) Int. Cl.: B62M 11/16, B62L 5/16, F16H 3/66

(54) **Mehrgang-Antriebsnabe mit mehr als 3 Gängen für ein Fahrrad**
Multi-speed hube transmission for a bicycle with more than threespeeds
Transmission de bicyclette à plus de trois vitesses

(30) Priorität: 23.07.1994 DE 4426239
(43) Veröffentlichungstag der Anmeldung: 19.03.1997
(62) Teilanmeldung aus: 95105271.1
(73) Patentinhaber: SRAM Deutschland GmbH, 97424 Schweinfurt (DE)
(72) Erfinder: Bergles, Eduard, 8041 Graz (AT)

(56) Entgegenhaltungen:
- EP-A- 0 549 570
- DE-A- 3 930 374

## Beschreibung

Die Erfindung betrifft eine Mehrgang-Antriebsnabe mit mehr als drei Gängen für ein Fahrrad gemäß dem Oberbegriff des Anspruchs 1.

Aus der DE-A-34 40 071 ist eine mit einer integrierten Rücktrittbremseinrichtung versehene Fünfgang-Antriebsnabe für ein Fahrrad bekannt. Die Antriebsnabe umfaßt eine auf einer Nabenachse drehbar gelagerte Nabenhülse, die von einem relativ zur Nabenachse und der Nabenhülse drehbar auf der Nabenachse gelagerten Antreiber über ein mehrstufiges Planetengetriebe antreibbar ist. Beim Rückwärtstreten wird das Planetengetriebe vom Antreiber rückwärts drehend angetrieben, wobei die Rücktrittbremseinrichtung entweder 1:1 oder mit dem Übersetzungssprung des Planetengetriebes entsprechend der jeweils eingelegten Gangstufe angetrieben wird. Somit mindert das Planetengetriebe in seinen Schnellgangstellungen das erreichbare Bremsmoment der Rücktrittbremseinrichtung.

Mit der DE 39 30 374.8 ist eine Mehrgangnabe mit sechs Gängen bekannt, deren Nabenhülse vom Antreiber über zwei Planetengetriebe angetrieben wird. Ein erstes Planetengetriebe läßt die Schaltung von zwei Übersetzungsstufen und einem Direktgang zu, ein zweites Planetengetriebe wird mit nur einer Übersetzungsstufe und einem Direktgang als Vorgelege verwendet. Hier sollte die Bremswirkung verbessert und der Aufwand reduziert werden. Es konnte allerdings nicht verhindert werden, daß die Bremse einmal mit und einmal ohne Vorgelegeübersetzung betätigt wird, wobei das gesamte Getriebe an der Übertragung des Rücktrittbremsmoments beteiligt ist.

Ferner ist mit der DE 28 19 471 eine Rücktritt-Bremsnabe mit drei Gängen bekannt, bei welcher das Antriebsmoment vom Antreiber über das Planetengetriebe und dessen Hohlrad über einen Rollenfreilauf an die Nabenhülse weitergegeben wird. Andererseits wird beim Rückwärtstreten ein Bremsrollenfreilauf betätigt, welcher den Bremsmantel mit der Nabenhülse in Reibverbindung bringt. Die Besonderheit der beiden Rollenfreiläufe besteht darin, daß neben Friktionsanbindung an einerseits die Nabenhülse und andererseits die feststehende Nabe die Rollen beider Freiläufe über einen einzigen Rollenkäfig gekoppelt sind. Auch bei dieser Nabe ist das Getriebe beim Rückwärtstreten am Bremsvorgang beteiligt.

Es ist die Aufgabe der Erfindung, eine Mehrgang-Antriebsnabe mit mehr als drei Gängen zu schaffen, bei welcher es mit einer in die Mehrgang-Antriebsnabe integrierten Rücktritt-Bremseinrichtung möglich ist, mit immer gleichen Totgangwinkeln bei jeder beliebig eingestellten Gangstufe im Getriebe der Mehrgang-Antriebsnabe eine Bremsung vorzunehmen. Die Rücktritt-Bremseinrichtung soll ein vom Getriebe unabhängiges Konstruktionsprinzip darstellen.

Diese Aufgabe wird erfindungsgemäß durch die in den Ansprüchen angegebenen Merkmale gelöst.

Die Erfindung wird nachstehend anhand eines Ausführungsbeispiels mit einer Zeichnung einer Zehngang-Antriebsnabe mit integrierter Rücktrittbremseinrichtung für Fahrräder erläutert.

In dem dargestellten Ausführungsbeispiel einer erfindungsgemäßen Zehngang-Antriebsnabe mit integrierter Rücktrittbremseinrichtung ist mit 1 eine Nabenhülse mit Speichenflanschen bezeichnet, die relativ zu einer Nabenachse 2 drehbar gelagert ist und von einem seinerseits relativ zur Nabenachse 2 und zur Nabenhülse 1 drehbaren Antreiber 4 über eine aus zwei Planetengetriebestufen bestehendem Planetengetriebeanordnung antreibbar ist. Der Antrieb des Antreibers 4 erfolgt über ein Antriebsritzel 3, welches mit diesem axial-und drehfest verbunden ist. Der Antreiber 4 stützt sich über ein erstes Lager 5 auf einem Festkonus 6 ab, der mit der Nabenachse 2 fest verbunden ist. Ein zweites Lager 7 stellt die Verbindung zur Nabenhülse 1 her, welche wiederum über ein drittes Lager 8 und einen Stellkonus 9 mit der Nabenachse 2 drehend verbunden ist. Das erste Planetengetriebe besteht aus dem Antreiber 4 mit einer Innenverzahnung 45 als Hohlrad, mindestens einem Planetenrad 12, einem ersten Planetenradträger 10 sowie einer Sonnenradverzahnung 18, die mit der Nabenachse 2 fest verbunden ist. Der erste Planetenradträger 10 ist mit einer Hülse 55 über ein erstes Klinkengesperre 21 verbunden; ein zweites Klinkengesperre 22 verbindet schaltbar den Antreiber 4 ebenfalls mit der Hülse 55, wobei das zweite Klinkengesperre 22 auf einem ersten Ring 54 angeordnet ist, der über eine erste Schaltscheibe 56 axial verschoben werden kann, bis die Klinken in eine Klinkenverzahnung 20 einrasten können. Der erste Ring 54 ist mit der Hülse 55 drehfest aber axial verschiebbar verbunden, wobei eine erste Feder 59 die erste Schaltscheibe 56 gegen eine erste Steuerscheibe 32 drückt. Die erste Steuerscheibe 32 wird in einem Schlitz 49 einer Führungshülse 48 axial geführt, wobei die Führungshülse 48 mit der Sonnenradverzahnung 18 permanent im Eingriff steht und sich also nicht verdrehen kann. In dem Schlitz 49 ist eine zweite Steuerscheibe 33 und eine dritte Steuerscheibe 34 angeordnet, die ebenfalls die Führungshülse 48 durchgreifen und somit axial verschiebbar jedoch nicht verdrehbar angeordnet sind. An der zweiten Steuerscheibe 33 liegt eine zweite Schaltscheibe 57 an, welche mit einem ersten Rollenkäfig 52 in Kontakt steht, der an die zweite Schaltscheibe 57 durch die Kraft einer zweiten Feder 60 gegen die zweite Schaltscheibe 57 gedrückt wird.

Ein drittes Klinkengesperre 23, welches auf einem zweiten Ring 58 angeordnet ist, befindet sich im ständigen Eingriff mit einem Hohlrad 19, das mit einer Hohlradverzahnung 46 mit einem kleinen Stufenrad 15 im Dauereingriff steht und zum zweiten Planetengetriebe gehört, welches ferner aus mindestens einem Doppelplanetenrad 13 mit einem großen Stufenrad 14 und eben dem kleinen Stufenrad 15 sowie aus einem kleinen Sonnenrad 16 und einem großen Sonnenrad 17 besteht. Das Doppelplanetenrad 13 ist auf einem zweiten Planetenradträger 11 angeordnet, der auf der Nabenachse 2 drehbar jedoch nicht axial verschiebbar angeordnet ist. Soll der Planetenradträger 11 angetrieben werden, so erfolgt der Kraftverlauf über einen dritten Ring 61 über ein viertes Klinkengesperre 24 über eine Verzahnung 64 zum zweiten Planetenradträger 11. Es handelt sich bei dem vierten Klinkengesperre 24 um ein steuerbares Klinkengesperre, welches von einer dritten Feder 63 in Eingriff mit der Verzahnung 64 gelangt, wenn die dritte Steuerscheibe 34 diese Verschiebung erlaubt. Das kleine Sonnenrad 16 und das große Sonnenrad 17 sind jeweils drehbar um die Nabenachse 2 angeordnet, sind aber axial festgelegt. Die wechselweise Schaltung innerhalb des zweiten Planetengetriebes geschieht durch Festsetzen jeweils eines der beiden Sonnenräder 16 oder 17, was durch eine Steuerhülse 35 geschieht, welche mit der Nabenachse 2 drehfest aber axial verschiebbar verbunden ist und eine Kupplungsverzahnung 65 aufweist, die einmal mit dem kleinen Sonnenrad 16 und einmal mit dem großen Sonnenrad 17 in Verbindung gebracht werden kann. Die Schaltung erfolgt jeweils gegen den Druck einer vierten Feder 66, welche über eine Schiebehülse 68 mit der Steuerhülse 35 in Druckkontakt steht. Eine fünfte Feder 67 läßt das kleine Sonnenrad 16 im Falle von Zahn-auf-Zahn-Stellung mit der Kupplungsverzahnung 65 das kleine Sonnenrad 16 solange ausweichen, bis die Zähne zum Eingriff gelangen können.

Der zweite Planetenradträger 11 ist über einen zweiten Rollenfreilauf 37 mit einem zweiten Rollenkäfig 53 mit der Nabenhülse 1 in Fahrtrichtung ebenso wie das Hohlrad 19 über einen ersten Rollenfreilauf 36 kuppelbar.

Die Rücktrittbremseinrichtung der Mehrgang-Antriebsnabe umfaßt einen Bremsrollenfreilauf 38, der über ein erstes Profil 47 mit dem Antreiber 4 verbunden ist und einen dritten Rollenkäfig 44 aufweist, der mit einem Bremshebel 41 in Friktionsverbindung steht. Der Bremsrollenfreilauf 38 wirkt beim Rückwärtstreten über das erste Profil 47 auf einen Bremsmantel 39, welcher mindestens einmal in Mantellinienrichtung geschlitzt ist und von einer Feder zusammengehalten wird. Der Bremsmantel 39 ist mit dem Bremshebel 41 über mindestens eine Mitnahmefläche 40 verbunden, wodurch im Falle von auftretenden Umfangskräften diese über den Bremshebel 41 an den Rahmenbau des Fahrrades weitergeleitet werden, wenn der Bremshebel 41 mit dem Rahmenbau verbunden ist.

Die Steuerung des Steuerrohres 27 erfolgt von außerhalb über eine Zahnstange 51, welche mit dem Betätigungsorgan in Verbindung steht, welches vom Fahrradfahrer bedient werden kann. Die Zahnstange ist in einem achsfesten Gehäuse 70 verschiebbar angeordnet und greift mit der auf ihr angeordneten Geradeverzahnung in die Verzahnung einer Zahnradstange 25 ein und kann diese verdrehen, wenn die Zahnstange 51 durch das Betätigungsorgan hin- und hergeschoben wird. Die Zahnradstange 25 ist in einer Zentralbohrung der Nabenachse 2 angeordnet und gelagert. Die Zahnradstange 25 besteht vorzugsweise aus einer Profilstange mit dem gewünschten Zahnradprofil, welches auch mindestens ein in der Nabenachse 2 eingelassenes Zahnrad 26 aufweist. Eine Innenverzahnung mit dem gleichen Profil im Steuerrohr 27 sorgt für ständigen Eingriff zwischen Zahnradstange 25, Zahnrad 26 und Steuerrohr 27, wenn das Zahnrad 26 beidseitig koaxiale Achsstummel aufweist, die in Taschen 50 in der Nabenachse 2 gelagert sind. Die Übersetzung des Steuergetriebes, bestehend aus Zahnstange 51, Zahnradstange 25, Zahnrad 26 und Steuerrrohr 27, beinhaltet eine Übersetzung von etwa 3:1, ausgehend von der Zahnstange 51 zum Steuerrohr 27 hin ins Langsame, was den Vorteil der leichten Bedienbarkeit und der direkten Koppelung der Zahnstange mit dem Bestätigungsorgan mit sich bringt. Das derart von außen verdrehbare Steuerrohr 27 weist an seinem Umfang mehrere Ringnuten auf, von denen jeweils eine Nutflanke in Kurvenform gefräst ist. So liegen die erste Steuerscheibe 32 an einer ersten Steuerkurve 28, die zweite Steuerscheibe 33 an einer zweiten Steuerkurve 29 und die dritte Steuerscheibe 34 an einer dritten Steuerkurve 30 an. An der Endseite des Steuerrohres 27 ist eine vierte Steuerkurve 31 angeordnet, die mit der Steuerhülse 35 zusammenwirkt, nachdem diese durch Federdruck der vierten Feder 66 angedrückt wird.

Zur Funktion des ersten Rollfreilaufs 36 ist zu sagen, daß auf dem Außendurchmesser des Hohlrades 19 ein zweites Profil 62 angeordnet ist, das gegenüber dem Außendurchmesser verlaufende, sich im Durchmesser vergrößernde Steigflächen aufweist, von denen je eine einer Rolle zugeordnet ist, was bei einer Rollenzahl von beipielsweise fünf ein pentagonales Profil 62 ergibt. Der erste Rollenkäfig 52 muß, wenn eine Berührung der Rollen am Innendurchmesser der Nabenhülse 1 stattfinden soll, durch eine Friktion mit einem langsamer drehenden Teil den Rollen einen Widerstand gegen die Mitnahme des innenliegenden Teiles mit einem Profil entgegensetzen, wodurch die Steigflächen des zweiten Profils 62 sich unter die Rollen schieben und diese gegen die Nabenhülse 1 anpressen, wodurch eine schlupflose Mitnahme der Nabenhülse 1 erfolgt. Der erste Rollenkäfig 52 erfährt im Falle der Verschiebung der zweiten Steuerscheibe 33 gegen die zweite Schaltscheibe 57 eine Friktion gegenüber der zweiten Schaltscheibe 57, hervorgerufen durch die zweite Feder 60: Der Rollenkäfig 52 bleibt in der Drehzahl zurück und ermöglicht den Rollen die Rückwärtsbewegung auf die Steigflächen bis zur Anlage am Innendurchmesser der Nabenhülse 1; die Verkeilung der Nabenhülse 1 mit dem Hohlrad 19 hat stattgefunden. Läßt der Antrieb nach oder überholt die Nabenhülse 1 das Hohlrad 19, so löst sich der Verband sofort. Gleiche Verhältnisse herrschen im zweiten Rollenfreilauf 37, wo ein drittes Profil 69 am Außendurchmesser des zweiten Planetenradträgers 11 angeordnet ist.

Beim Bremsrollenfreilauf 38 unterscheiden sich die Verhältnisse in der Drehrichtung und im anzutreibenden Teil, hier dem Bremsmantel 39. Dieser besteht vorzugsweise aus zwei Halbschalen, die sich, wie bereits erwähnt, aufspreizen und so gegen den Innendurchmesser der Nabenhülse 1 anpressen lassen. Der Bremshebel 41 gleitet beim Antrieb ständig auf dem Antreiber 4, weshalb hier eine Lagerschalter 43 für verlustarme Gleitbedingungen sorgt. Mit dem Bremshebel 41 ist ein Staubdeckel 42 verbunden, der das Eindringen von Schmutz in die Nabe und das Austreten von Schmiermittel aus der Nabe verhindern soll.

Was die Schaltfolge und deren Steuerung innerhalb des Planetengetriebes betrifft, so sind die axialen Wege der ersten Steuerscheibe 32, der zweiten Steuerscheibe 33 und der dritten Steuerscheibe 34 sowie der Steuerhülse 35 angedeutet, was unschwer erkennen läßt, daß der Gesamtweg eines jeden der Elemente jeweils nur einen Schritt darstellt, der nur einmal in einer Richtung durchmessen wird. Wird die erste Steuerscheibe 32 bei jedem Schaltvorgang bewegt, so wird die zweite Steuerscheibe 33 und die dritte Steuerscheibe 34 bei einem gesamten Schaltzyklus nur einmal und die Steuerhülse 35 nur zweimal bewegt.

Um die zehn Gänge der Nabe in Antriebsrichtung zu schalten , sind insgesamt sieben Kupplungen nötig - vom Bremsrollenfreilauf 38 einmal abgesehen -, von denen mindestens drei schaltbar sein müssen. Es handelt sich um den ersten Rollenfreilauf 36 und den zweiten Rollenfreilauf 37, von denen der erste Rollenfreilauf 36 schaltbar ist. Ferner sind das erste Klinkengesperre 21, das zweite Klinkengesperre 22, das dritte Klinkengesperre 23 und das vierte Klinkengesperre 24 beteiligt, von denen das zweite Klinkengesperre 22 und das vierte Klinkengesperre 24 zu- bzw. abschaltbar sind. Schließlich gehört als siebte Kupplung, die als schaltbare Kupplung ausgeführt ist, die Kupplungsverzahnung 65 dazu, welche einmal das große Sonnenrad 17 und einmal das kleine Sonnenrad 16 drehfest mit der Nabenachse 2 koppelt.

Die Mehrgang-Antriebsnabe ist in der ersten Gangstufe mit der größten Berggang-Stufe dargestellt. Der Kraftfluß verläuft zur Nabenhülse 1 wie folgt: Antreiber 4, Planetenrad 12, erster Planetenradträger 10, erstes Klinkengesperre 21, Hülse 55, zweiter Ring 58, drittes Gesperre 23, Hohlrad 19, Doppelplanetenrad 13 mit großem Sonnenrad 17, zweiter Planetenradträger 11, Rollenfreilauf 37, Nabenhülse 1. Der erste Rollenfreilauf 36, das zweite Klinkengesperre 22 sowie das vierte Klinkengesperre 24 bleiben ausgeschaltet.

Die zweite Gangstufe wird durch Zuschalten des zweiten Klinkengesperres 22 erreicht, wodurch die Hülse 55 über den ersten Ring 54 direkt, also nicht mehr untersetzt, angetrieben wird.

Zur Erreichung der dritten Gangstufe wird anstelle des großen Sonnenrades 17 das kleine Sonnenrad 16 mittels der Kupplungsverzahnung 65 festgesetzt; außerdem wird das zweite Klinkengesperre 22 außer Eingriff gebracht. Folgender Kraftfluß entsteht: Antreiber 4, Planetenrad 12, erster Planetenradteräger 10, erstes Klinkengesperre 21, Hülse 55, zweiter Ring 58, drittes Gesperre 23, Hohlrad 19, Doppelplanetenrad 13 mit kleinem Sonnenrad 16, zweiter Planetenradträger 11, Rollenfreilauf 37, Nabenhülse 1.

Die vierte Gangstufe wird analog zur zweiten Gangstufe mit der Zuschaltung des zweiten Klinkengesperres 22 erreicht.

Zur Erreichung der fünften Gangstufe, die hinsichtlich des zweiten Planetengetriebes einen Direktgang darstellt, wird das vierte Klinkengesperre 24 mit dem zweiten Plantenradträger 11 in Eingriff gebracht. In dieser Stellung überholt das Hohlrad 19 über das dritte Klinkengesperre 23 den dritten Ring 61. Außerdem wird das zweite Klinkengesperre 22 außer Eingriff gebracht. Folgender Kraftfluß entsteht: Antreiber 4, Planetenrad 12, erster Planetenradträger 10, erstes Klinkengesperre 21, Hülse 55, zweiter Ring 58, dritter Ring 61, viertes Klinkengesperre 24, zweiter Planetenradträger 11, Rollenfreilauf 37, Nabenhülse 1.

Die sechste Gangstufe wird analog zur vierten Gangstufe mit der Zuschaltung des zweiten Klinkengesperres 22 erreicht.

Zur Erreichung der siebten Gangstufe wird der erste Rollenfreilauf 36 zugeschaltet. Dies bedeutet, daß das Hohlrad 19 über das zweite Planetengetriebe ins Schnelle angetrieben wird, wodurch das dritte Klinkengesperre 23 überholt wird. Außerdem wird das zweite Klinkengesperre 22 außer Eingriff gebracht. Folgender Kraftschluß entsteht: Antreiber 4, Planetenrad 12, erster Planetenradträger 10, erstes Klinkengesperre 21, Hülse 55, zweiter Ring 58, dritter Ring 61, viertes Klinkengesperre 24, zweiter Planetenradträger 11, Doppelplanetenrad 13 mit kleinem Sonnenrad 16, Hohlrad 19, erstes Rollenfreilauf 36, Nabenhülse 1.

Die achte Gangstufe wird analog zur sechsten Gangstufe mit der Zuschaltung des zweiten Klinkengesperres 22 erreicht.

Zur Erreichung der neuten Gangstufe wird anstelle des kleinen Sonnenrades 16 das große Sonnenrad 17 mittels der Kupplungsverzahnung 65 festgesetzt; außerdem wird das zweite Klinkengesperre 22 außer Eingriff gebracht. Folgender Kraftfluß entsteht: Antreiber 4, Planetenrad 12, erster Planetenradträger 10, erstes Klinkengesperre 21, Hülse 55, zweiter Ring 58, dritter Ring 61, viertes Klinkengesperre 24, zweiter Planetenradträger 11, Doppelplanetenrad 13 mit großem Sonnenrad 17, Hohlrad 19, erster Rollenfreilauf 36, Nabenhülse 1.

Die zehnte Gangstufe schließlich wird analog zur achten Gangstufe mit der Zuschaltung des zweiten Klinkengesperres 22 erreicht.

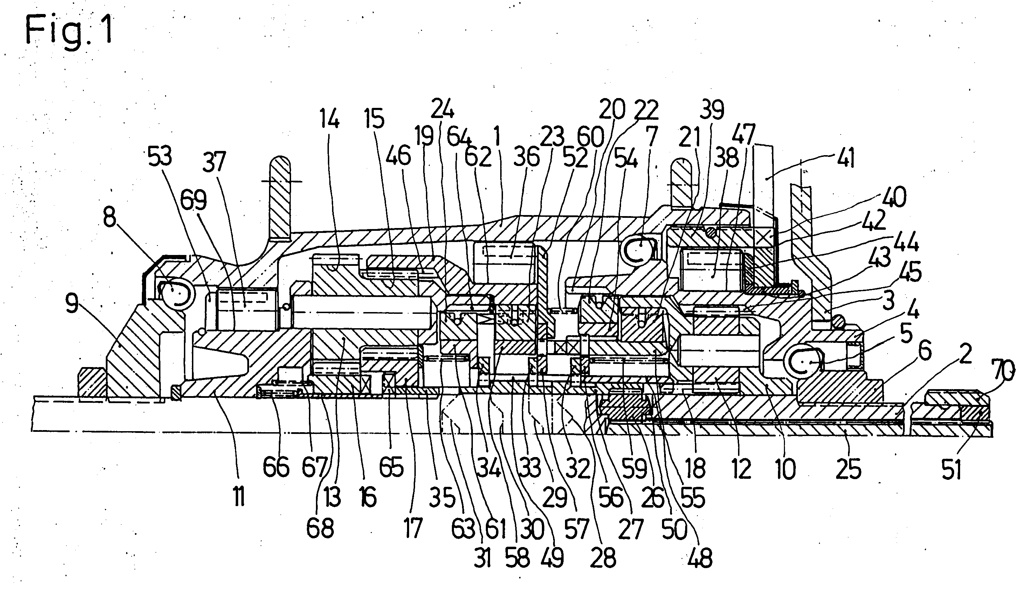

## Patentansprüche

1. Mehrgang-Antriebsnabe mit mehr als 3 Gängen für ein Fahrrad, umfassend
* eine Nabenachse (2),
* einen zur Nabenachse (2) koaxialen, relativ zur dieser sowie relativ zur Nabenhülse (1) drehbaren Antreiber (4)
* eine Planetengetriebeanordnung (45,18,12;46,13,16,17) mit mehr als 3 wahlweise in einen Antriebsweg zwischen den Antreiber (4) und die Nabenhülse (1) schaltbaren Getriebestufen,
* wahlweise schaltbare Kupplungseinrichtungen (21,22,23,24,36,37) im Antriebsweg der Getriebestufen,
* eine in Antriebsverbindung mit dem Antreiber (4) stehende, auf die Nabenhülse (1) wirkende Rücktritt-Bremseinrichtung (4,47,38,39)
* eine Steuereinrichtung zur Betätigung der schaltbaren Getriebestufen durch das Zentrum der Nabenachse (1) von außerhalb, dadurch gekennzeichnet,
daß der Antreiber (4) über einen Bremsrollenfreilauf (38) und einen Bremsmantel (39) beim Rückwärtstreten mit der Nabenhülse (1) eine direkte reibende Verbindung eingehen kann.

2. Mehrgang-Antriebsnabe nach Anspruch 13,
dadurch gekennzeichnet,
daß ein Bremshebel (41), der mit dem Bremsmantel (39) mittels Mitnahmeflächen (40) drehfest verbunden und mit seinem Ende am Fahrradrahmen befestigt ist, auf einer Ebene angeordnet ist, die den Antreiber (4) schneidet.

3. Mehrgang-Antriebsnabe nach Anspruch 13,
dadurch gekennzeichnet,
daß der Bremshebel (41) auf dem Antreiber (4) drehbar gelagert ist.

4. Mehrgang-Antriebsnabe nach Anspruch 13,
dadurch gekennzeichnet,
daß der Bremsrollenfreilauf (38) einen dritten Rollenkäfig (44) aufweist, der mit dem feststehenden Bremshebel (41) reibend verbunden ist.

## Claims

1. Multi-speed hub for cycles with more than three speeds, comprising
* a spindle (2),
* a driver (4) coaxial with the spindle (2) and rotatable relative to it as well as relative to the housing (1)
* a planetary gearing assembly (45, 18, 12; 46, 13, 16, 17) with more than three gear ratios which can be selected at will in a drive path between the driver (4) and the housing (1)
* clutch devices (21, 22, 23, 24, 36, 37) which can be selected at will in the drive path of the gearing stages,
* a back-pedalling brake (4, 47, 38, 39) in driving connection with the driver (4) and acting on the housing (1) of the hub
* a control device for actuating the changes in speed of the gear ratios from outside through the centre of the spindle (1),
characterised in that
the driver (4) can enter into a direct frictional connection with the housing (1) on reverse movement through a braking roller free-wheel (38) and a brake sleeve (39).

2. Multi-speed driving hub according to claim 1,
characterised in that
a brake lever (41), swhich is connected to the brake sleeve (39) to rotate with it by means of follower surfaces (40) and has its end secured to the frame of the cycle, is arranged in a plane which intersects the driver (4).

3. Multi-speed driving hub according to claim 1,
characterised in that
the brake lever (41) is rotatably connected to the driver (4).

4. Multi-speed driving hub according to claim 1,
characterised in that
the braking roller free-wheel (38) has a third roller cage (44) which is frictionally connected to the stationary brake lever (41).

## Revendications

1. Moyeu d'entraînement multivitesse avec plus de 3 vitesses pour une bicyclete, comprenant
* un axe du moyeu (2),
* un entraîneur (4) coaxial à l'axe du moyeu (2), rotatif autour dudit axe et par rapport au corps du moyeu (1),
* un système d'engrenages planétaires (45,18,12;46,13,16,17) avec plus de 3 étages a selectionner dans une voie d'entraînement entre l'entraîneur (4) et le corps du moyeu (1),
* des accouplements a sélectionner en option (21,22,23,24,36, 37) dans la voie d'entraînement desdits étages,
* un dispositif de freinage par rétropedalage (4,47,38,39) doté d'une liaison d'entraînement avec l'entraîneur (4) et agissant sur le corps du moyeu (1),
* un dispositif de commande pour actionner lesdits étages du dehors, a la faveur du centre creux de l'axe (4),
caractérisé en ce que
l'entraîneur (4) peut entrer, par l'entremise d'une roue libre à galets freinants (38) et d'un manchon de frein (39), dans un contact freinant avec le corps du moyeu (1) lorsqu'on pedale en arrière.

2. Moyeu d'entraînement multivitesse selon la revendication 1,
caractérisé en ce
qu'un bras de frein (41), solidaire en rotation du manchon de frein (39) avec des surfaces de contact (40) et relié par son extrémite au cadre de la bicyclette, est disposé dans un plan qui coupe l'entraîneur (4)

3. Moyeu d'entraînement multivitesse selon la revendication 1,
caractérisé en ce
que le bras de frein (41) est rotatif sur l'entraîneur (4).

4. Moyeu d'entraînement multivitesse selon la revendication 1,
caractérisé en ce
que la roue libre à galets freinants (38) comporte une troisième cage à galets (44), reliee en friction avec le bras de frein fixe (41).
